(19) Europäisches Patentamt

European Patent Office

Office européen des brevets

(11) **EP 4 265 117 A1**

(12) **EUROPEAN PATENT APPLICATION**

(43) Date of publication:
**25.10.2023 Bulletin 2023/43**

(21) Application number: **22382382.4**

(22) Date of filing: **22.04.2022**

(51) International Patent Classification (IPC):
**A23C 1/00** *(2006.01)*      **A23C 9/00** *(2006.01)*
**B05D 1/04** *(2006.01)*

(52) Cooperative Patent Classification (CPC):
**A23C 1/00; A23C 9/16**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Universitat Autònoma de Barcelona
08193 Bellaterra (Cerdanyola del Vallès) (ES)**

• **Consejo Superior De Investigaciones Científicas
28006 Madrid (ES)**

(72) Inventors:
• **Castillo Zambudio, Manuel
08193 Bellaterra (Cerdanyola del Vallès) (ES)**
• **Zamora Viladomiu, Anna
08193 Bellaterra (Cerdanyola del Vallès) (ES)**
• **Pérez Playà, Bernat
08193 Bellaterra (Cerdanyola del Vallès) (ES)**
• **Abad Muñoz, Libertad
08193 Bellaterra (Cerdanyola del Vallès) (ES)**

(54) **METHOD AND SYSTEM FOR CONCENTRATING OR DEHYDRATING LIQUID PRODUCTS**

(57) A method and a system for concentrating or dehydrating liquid products are provided. The method comprises applying an electrical potential to a liquid product using an injection needle, obtaining a concentrated or dehydrated product as a result. Said electrical potential is comprised in a range between 20 kV and 50 kV, and the distance between said injection needle and a collector used for collecting the concentrated or dehydrated product is between 10 cm and 50 cm.

EP 4 265 117 A1

**Description**

Technical Field

The present invention is directed to a method and system for concentrating or dehydrating liquid products. The invention is particularly applicable to the manufacture of milk powder. The invention can also be applied to concentrate/dehydrate other types of liquid products such as juices, sauces, broths, etc.

Background of the Invention

Milk production has been booming in recent centuries. Improvements in livestock feed and feeding, animal selection as well as in the field of genetics have resulted in a significant increase in production, in addition to a decrease of maintenance costs.

Raw milk is a fresh material very susceptible to being altered by microorganisms because it has an excellent composition of nutrients and elevated water activity, having a shelf life of 12 to 24 h. Current processing methods to ensure safety and extend shelf life are mainly thermal. Highlighting the extremes, pasteurization is capable of extending the shelf life from one to three weeks in refrigeration, while more intense treatments such as UHT (Ultra High Temperature), extends it from three to six months at room temperature, with gelation due to aging being the main cause of deterioration.

Almost complete extraction of water from food is the best form of conservation over time so as not to waste the surpluses produced. In the case of milk powder, the shelf life is extended to six months and three years, for whole and skim milk, respectively. Milk powder has nutritional value preservation. Additionally, it has an added value, and a great advantage is obtained at the logistical level, because the extraction of water leads to a much lower storage volume, reducing both stockage and transportation costs. For several decades, the process of obtaining milk powder has been improved, along with related research and science. Technical improvements have been made to obtain a product with a better nutritional profile, specific functional properties or superior hygienic conditions.

Current processing methods have high energy consumption, as a consequence of heat treatment operations such as pasteurization and the extraction of water by evaporation and final atomization. Furthermore, the use of successive heat treatments implies thermal damage to the product, which typically affect most relevant milk components such as proteins, minerals, lactose, fat and vitamins [8]. Among them are nutritional loss, denaturation of whey proteins and changes in functional properties.

Apart from that, the phenomenon of electrohydrodynamic atomization or EHDA, commonly called electrospray, in which Electro refers to electrical energy; HydroDynamic refers to fluid dynamics; and Atomization refers to converting liquid into fine droplets, is a technique that generates very fine droplets with a mono-dispersed size from a liquid under the influence of an electrical field [1]. The energy of an intense electric field, on the order of $kV \cdot m^{-1}$, is used to achieve the separation of microdroplets. The main properties that the fluid must meet to be atomized are to have a representative electrical conductivity and low surface tension. These properties are important to have an adequate control of the particle size and the electrical intensity that circulates in the capillary [2].

The microdroplets formed become dehydrated by traveling through the electric field. When the drop leaves the needle, it becomes electrically charged, causing the accumulation of charges on its surface. This causes the electrostatic repulsion of the charges to counteract the surface tension of the liquid, provoking the deformation of the drop surface. This deformation continues until a critical point is reached where the electrostatic repulsion exceeds the surface tension, causing the evaporation of the solvent [3-5].

The degree of evaporation of the solvent will depend on many factors, among them, those intrinsic to the product and the instrumental ones. The type and concentration of the polymer and solvent used determine the properties of the solution, such as pH, conductivity, viscosity, and surface tension. Instrumental parameters include the applied electrical potential, the flow rate of the solution, the distance between the tip of the needle and the collector, and occasionally the nature of the collector material. In addition, the environmental conditions such as temperature, relative humidity and air percussive flow to the needle in the process chamber affect the process (i.e. droplets diameter and evaporation rate) [4].

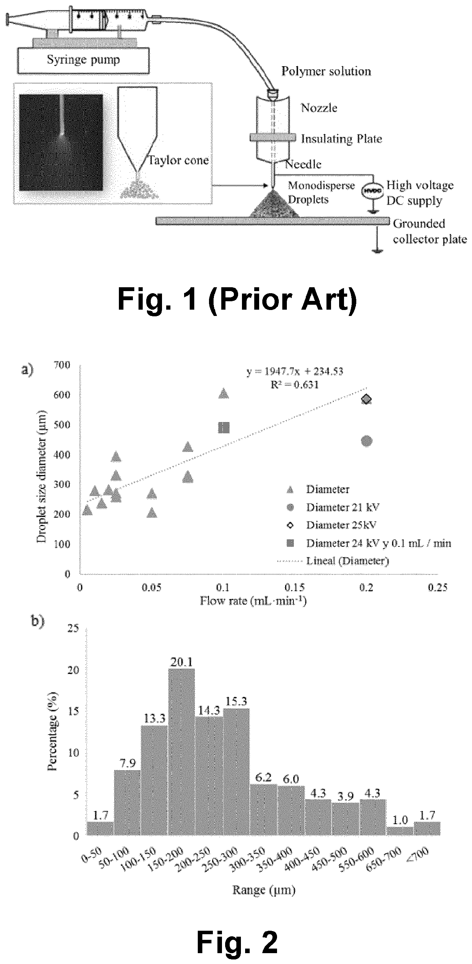

The basic EHDA setup consists of several major components: a syringe pump, a syringe, a metal needle that serves as a nozzle, a high-voltage power supply, and a grounded substrate that serves as a collector (see Fig. 1 for an example). Some EHDA configurations can employ a closed chamber where the air/nitrogen flow transfers particles to the collecting filters. The use of the closed chamber reduces solvent evaporation and facilitates the formation of smaller particles with a smoother surface morphology.

This technology is widely studied in the fields of tissue engineering and regenerative medicine, nanostructured sensors, textile industry, materials science and chemistry [5]. However, the use of this technology in food processing remains unexplored. The possible food applications, in the field of study, are encapsulation, enzyme immobilization, food coating and the development of materials for filtration and active food packaging [4]. So far, only one study carried out in 2010 on the formation of chocolate fibers by electrospinning has shown that technique modifies texture and mouthfeel [6].

Therefore, it is well-known that the traditional milk dehydration process is based on sequential application of heat, which has a direct and undesirable effect on the appearance, physicochemical properties and nutritional value of milk. The resulting effect will depend on the intensity of the treatment. Sequential application of heat induces successive damage on pretty much all main compounds of milk. In addition to milk damage, milk dehydration is expensive because of energy consumption required for continuous heat application [9].

New methods and systems for the transformation of perishable products such as milk into long-lasting products such as concentrated milk or milk powder, without causing damage to the product and a high energy cost, are therefore needed.

Description of the Invention

The object of the present invention is thus to provide a method and a system for concentrating or dehydrating liquid products such as milk or milk products, including sweetened condensed milk, evaporated milk, caramelized milk ("*dulce de leche*"), infant formula, etc.; juices, including nectars and juices with pulp; sauces; soup broths; whey protein concentrate/isolate (WPC/WPI), casein fraction concentrate/isolate, among others, avoiding both a significant energy consumption and the negative effects associated with thermal damage.

This object is fulfilled by a method with the characteristics of claim 1 and by a system with the features of claim 8.

To that end the present invention proposes, according to one aspect, a method comprising the application of an electrical potential to a liquid product using an injection needle, obtaining a concentrated or dehydrated product as a result, where said electrical potential is comprised in a range between 20 kV and 50 kV, and where the distance between said injection needle and a collector used for collecting the concentrated or dehydrated product is between 10 cm and 50 cm.

Present invention also proposes, according to another aspect, a system that comprises an injection needle configured to apply an electrical potential to a liquid product, obtaining a concentrated or dehydrated product as a result; and a collector configured to collect the obtained concentrated or dehydrated product. According to the proposed system, the electrical potential is comprised in a range between 20 kV and 50 kV, and the distance between said injection needle and said collector is between 10 cm and 50 cm.

In some particular embodiments, the liquid product comprises milk or a milk product and the concentrated or dehydrated product comprises concentrated milk or milk powder.

In some particular embodiments, the electrical potential is kept below 30 kV and the nozzle-collector distance is kept at about 10 cm.

In some embodiments, the electrical potential is kept constant throughout the application of the electrical potential.

In some embodiments, the electrical potential is applied at a flow rate comprised between 0.005 mL min$^{-1}$ and 0.5 mL min$^{-1}$. In other embodiments, for industrial scale processing, the flow rates applied can be higher, for instance, up to 80 tons/hour.

In some embodiments, a plurality of injection needles are used/included. Each one of the needles applies the electrical potential at the same time; thus increasing performance of the process.

In some embodiments, the injection needle or the plurality of injection needles is/are set following a vertical configuration that takes advantage of gravity. Alternatively, the injection needle or the plurality of injection needles is/are set following a horizontal configuration.

In some embodiments, before the application of the electrical potential the liquid product is subjected to a soft thermal process to increase or decrease the temperature thereof.

In some embodiments, the collector is rotatory.

In some embodiments, the injection needle or the plurality of injection needles is/are made of an electrically conductive material, for example a metal or a metal alloy, a conductive plastic or polymer, among others.

In yet some embodiments, the collector and the injection needle or the plurality of injection needles are disposed within a closed chamber.

Some of the main novelty aspects of the proposed technology are listed below:

1. non-thermal elimination of water in liquid products,

2. complete avoidance of thermal damage and associated potentially harmful substances,

3. improved conservation of protein functionality, with increased technological value,

4. improved conservation of nutritional value (lysine and thermolabile vitamins),

5. increased porosity of the food matrix,

6. complete avoidance of large amounts of service water for heating/cooling/steaming,

7. expectable reduction of energy consumption on large scale, optimized industrial operations, which in turn, would decrease CO2 emission, and processing cost,

8. potential bactericidal effect of electrospraying,

9. potential combination with UV light treatment to ensure safety (if required),

10. potential for generation of food-based films/nanostructures (new functionality generation);

11. in atomization, the use of dry and hot air, which involves the extraction of water from the air, the heating of the air, and a high energy consumption, would be avoided.

Brief Description of the Drawings

The previous and other advantages and features will be more fully understood from the following detailed description of embodiments, with reference to the attached figures, which must be considered in an illustrative and non-limiting manner, in which:

Fig. 1 is a typical electrospraying setup according to prior art. Inset shows the digital image and representation of the electrospraying process.

Fig. 2 illustrates: a) Relationship between droplet size and flow rate when processing skim milk reconstituted at 24%; b) Droplet size histogram of the entire screening for milk electrosprayed at 29 kV.

Fig. 3 shows optical microscopy images with ocular of 2.5X. Skim milk reconstituted at 24% electrosprayed at 29 kV and a flow rate of: a) 0.02 mL·min-1 and b) 0.015 mL·min-1.

Detailed Description of Preferred Embodiments

Present invention proposes a new technology that considers the use of an electrical field (i.e. the use of electrospraying) for the extraction of water in liquid products. To do so, the electrical field is applied at sufficiently low flow rates with a field intensity of 20 kV - 50 kV and a nozzle-collector distance of 10 - 50 cm. The inventors have realized that at such configuration parameters, a very significant extraction of water is induced, without affecting the structure of the liquid product and without applying high temperatures to the liquid product to concentrate it.
The invention is particularly relevant, although not limitative, for the manufacture of milk powder. In other alternative embodiments, the invention is applied to the manufacture of other milk products. Even, in other embodiments, the invention is applied to other liquid products such as juices, sauces, soup broths, for instance, bouillon, consommé, strained cream soups, etc.
According to the invention different number of injection needles can be used. For example, a single-phase nozzle (i.e. 1 needle), a Single-Phase 5-Nozzle (i.e. 5 needles), etc. The injection needle(s), in particular the tip thereof, are made of an electrically conductive material.
Following, a particular example of the application of the proposed invention in which milk was concentrated or dehydrated is explained.

Example 1:

In order to assess the potential of EHDA in obtaining milk powder, the main treatment variables were screened: the total solids of the reconstituted skim milk and the variables of the equipment used.
The concentration of milk solids was arbitrarily established as 12, 24 and 36%, to simulate milk and concentrated milk with concentration factor of 2 and 3, respectively. The analyses of their density, conductivity and stability allowed to detect that the 36% milk was unstable and was replaced by 30% of total solids.
Regarding the equipment used, there were 3 adjustable variables: the distance between the injection tip and the collector (nozzle-collector; cm), the applied voltage (kV) and the flow rate (mL·min-1). In order to decide which conditions were the optimal for the experiment, preliminary screening tests were carried out keeping the distance between the tip and the collector fixed at 10 cm. Regarding the applied voltage, the range given by the equipment was from 1 to 30 kV. During the initial tests, it was qualitatively observed that the higher the voltage, the ejected liquid came out with a more perpendicular angle towards the collecting plate and the more water removal was achieved. So, the standard voltage was set at 29 kV. Finally, for the flow rate, the initial tests started using very low flows around a few μL·h⁻¹, but the fluidic resistance of milk provoked a percussion problem that blocked the flow through the electrospraying tubes. Due to this problem, the setup was modified, incorporating a pump with a higher flow rate, which was able to reach 10 mL·min⁻¹. In addition to higher flow rates, larger syringes could be used, allowing an increase in sample throughput. A full screening was performed to select the optimal flow rates based on the study of the droplet size and the chemical elements of the obtained products. It started with a flow rate of 5 mL·min⁻¹ and decreased to 0.2 mL·min⁻¹ because no droplets were obtained. Subsequently, the flow rate was decrease to 0.005 mL·min⁻¹ observing differences in the droplet size. But this flow rate was not selected because not enough product was obtained to perform the analyses. The selected flow rates at the end of the screening were 0.2 and 0.01 mL·min⁻¹.

Once the initial tests had been completed, a non-randomized factorial experimental design was made with three milk reconstitution levels (12, 24 and 30%) and the two selected flow rates (0.2 and 0.01 mL·min⁻¹). The field intensity and the distance between the tip and the collector were the same throughout the study to be able to observe the effect of the two studied factors on protein denaturation and total solids determination. The experiment was replicated twice, performing a total of 12 trials ($N = n \cdot a \cdot b = 2 \cdot 3 \cdot 2 = 12$).

For this particular study, commercial skim milk powder dehydrated by spray drying was used. It is a standard milk with a high microbiological and functional quality distributed by LACTALIS Ingredients (Bourgbarré, France). It has a WPNI ≥ 7, so it belongs to the "low heat" category. All the milk used came from the same 25 -kg bag.

The reconstitution of the milk was carried out individually with Milli-Q water (resistivity: 18 MΩ ·cm) at 20 °C and the amount of added milk powder was adjusted to reconstitute it at 12, 24, 30 and 36% (w/w). Weighing of the milk powder and the water was done with an analytical balance (FV-220C, Gram Group, Barcelona, Spain). The reconstitution process was based on three stages: thirty minutes of stirring, thirty at undisturbed darkness, and five of sonication to eliminate small air bubbles that could affect the correct operation of the equipment. Leaving it undisturbed at darkness is necessary for the correct hydration and stabilization of the milk components, especially the casein micelles, and the darkness is needed to prevent the photooxidation. The beaker where the milk was reconstituted was kept closed, to avoid the evaporation of water due to the difference in relative humidity between the sample and the environment, minimizing the concentration of solids and evaporative cooling on the sample surface.

The density of reconstituted milk samples was estimated in triplicates with the help of an analytical balance (FV-220C, Gram Group, Barcelona, Spain) and volumetric flasks 25.00 ± 0.03 mL. Density (p) was calculated from weigh (w) and volume (v) as, $\rho = \frac{w}{v}$ . The conductivity of milk samples was measured in triplicates with a conductimeter (Sension+ 340 MM340, Hach Company, Loveland, United States).

The stability analysis was performed with the Tubiscan (Lab expert, Formulaction, Toulouse, France), and the software Turbisoft Lab (version 2.3, Formulaction). Turbiscan vials were filled up to 40 mm with a Pasteur pipette and the analysis was carried out a temperature of 20 °C. Two replicates were made for each sample. Emulsion stability was characterized using the Turbiscan Stability Index (TSI), calculated as follows [7]:

$$TSI = \sum_i \frac{\sum_h |scan_i(h) - scan_{i-1}(h)|}{H}$$

where scan$_i$ (h) is the light intensity of the *i*-th scan at a height of h, and H is the total height of the measured sample.

A reflected optical microscope with visible light in transmission operation was used to carry out the droplet size analysis (Leica DM2700M, Leica Microsystems, Wetzlar, Germany). It has a built-in video camera (Moticam 10+ SB-09, Motic, Hong Kong, China). The image software used was Motic Image plus Glass slides of3.0. 20 x 20 x 1 mm and 22 mm radius spherical polished stainless-steel plates were used. Images were taken using a 2.5X ocular in order to observe the droplets. Four photos in different places were taken for each glass slide: in the center and 2 cm to the right, left and top.

All images were taken the day after production and later were analyzed using Image J (National Institutes of Health, latest version December 10, 2019).

After being observed under the reflected optical microscope, the samples were completely dried in a desiccator connected to the vacuum line for thirty minutes. The samples were analyzed with Scanning Electron Microscope with Energy-dispersive X-ray spectroscopy (Auriga-40, Zeiss, Germany). The use of glass slides, being a non-conductive substrate, implied that only 10 keV could be used during the analysis. The substrate was changed to polished stainless-steel, to increase the energy to 20 keV, which improved the analysis. The focal distance between the milk samples and the electron beam was set at 3 mm. The analysis of the elements was carried out with the help of the SmartSEM software (Zeiss), and the sample elements observed were carbon, nitrogen, oxygen, sodium, magnesium, phosphorus, potassium and calcium, with no signs of external contamination as expected.

To carry out the analysis, the sample was taken directly in weighed aluminum foil previously dehydrated for 2 h at 105 °C in a convection oven (UFB 400, Memmerk GmbH, Schwabach, Germany). As the flow rate used to electrospray the samples was very different, the time required to take enough sample was adjusted to 20 and 180 min, for the flow rates 0.2 and 0.01 mL·min$^{-1}$, respectively. The sample was stored in an airtight container and dehydrated at 105 °C for 24 h. The moisture content of the sample was calculated by the difference between the initial and final weight of the sample, from which the total solids were obtained. From the total solids, the Q factor, yield, wet yield and energy consumption indices were calculated.

Q factor is the ratio between the dry matter content of the concentrated product and that in the original material (Walstra et al., 2006). Q factor (Q) was calculated form initial total solids ($TS_i$, in %) and final total solids ($TS_f$, in %) as,

$$Q = \frac{TS_f}{TS_i}.$$

The yield expressed as g of obtained total solids per 100 g of milk processed was calculated from the weight of the sample after drying it in a convection oven (w, in g) and the weight of processed milk ($w_0$, in g) as,

$$Dry\ yield = \frac{100w}{w_0}.$$

The wet yield expressed as g of obtained product per min of processing was calculated from the weight of the

$$Wet\ yield = \frac{w}{t}.$$

obtained product (w, in g) and the time of electrospraying process (t, in min) as,

The energy consumption was calculated using the formula:

$$E = tP / (Wa_0 - Wa_f)$$

Where E is energy consumption (kJ·g$^{-1}$), $Wa_0$ and $Wa_f$ are the initial and final water content of the product (g), t is the time (s) and P is the maximum power of the equipment (kW).

Both qualitative and quantitative analysis of the main proteins of the samples were carried out by SDS-PAGE analysis under reducing and non-reducing conditions using separating and stacking gels containing 14% or 4% acrylamide, respectively. The reducing conditions were achieved by the addition of a reducing reagent, β-mercaptoethanol, that breaks disulfide bridges. Reduced and non-reduced samples were mixed twice their volume with double-strength buffer and centrifuged (Laemmli, 1970). Supernatants containing the protein without fat, were diluted with the same buffer to have a dilution $10^{-1}$ and 15 μL was loaded onto the gels. BSA (10 μg) and a mix of casein, α-la and β-lg (10 μg) were used as a standard and were run together with the samples. Gels were run at 200 V, stained using 0.1% (wlv) Coomassie Brillant Blue R250 in a 16:1:50 mixtures of methanol, acetic acid and distilled water. Distained gels were scanned with CanonScan (Lide 220, from Canon, Japon) and analyzed with GelAnalyzer software (version 19.1, created by Istvan Lazar Jr. and Istvan Lazar Sr.). The amount of sample was determined to obtain bands large enough for the whey proteins without reaching the total saturation of the casein bands, because the percentage of caseins is much higher than that of whey proteins.

Obtained data were processed and analysed using the Statgraphics Centurion software (version 18.1.13, Statgraphics Technologies Inc., The Plains, Virginia, United States).

The analysis of variance (ANOVA) is based on the comparison of variability of the dependent variables under study between and within different groups and allows to attribute the variability of said variables to the effect of certain explanatory variables (factors or effects). The ANOVA was performed using the simple Anova procedure, joining the two factors (total solids and flow rate) as one. LSD test was used for comparison of sample data. Evaluations were based on a significance level of $p < 0.05$.

Multiple linear regression (MLR) allows generating a linear model in which the value of the dependent variable or response is determined from a set of independent variables called predictors. The MLR was performed using multiple linear regression procedure. Analysis was carried out to estimate the value of total solids based on the two factors of the experiment (total solids and flow rate).

Pearson's correlation coefficients, which is an index that measures the degree of covariation between different linearly related quantitative variables, were determined using the multivariate Analysis procedure (correlations). The analysis was performed for all the dependent variables related to the efficiency of the treatment: total solids, yield and diameter of droplets.

The Shapiro-Wilk test was performed to determine if the droplet size distribution can be associated with a normal distribution with 95% confidence.

Results:

Droplet size:

No significant correlation between the flow rate and the droplet size was observed when performing the screening, electrospraying at 29 kV and different flow rates skim milk powder reconstituted at 24% (w/w) (Fig. 2 (a)), although a certain trend could be observed. About 90% of the droplets had a size between 50 and 500 $\mu$m (Fig. 2 (b)). The pattern of the droplet size distribution was repeated in almost all individual analyses, irrespectively of the flow rate used. The Shapiro-Wilk test gave a p-value = $9.4 \cdot 10^{-16}$, confirming the normality of the data.

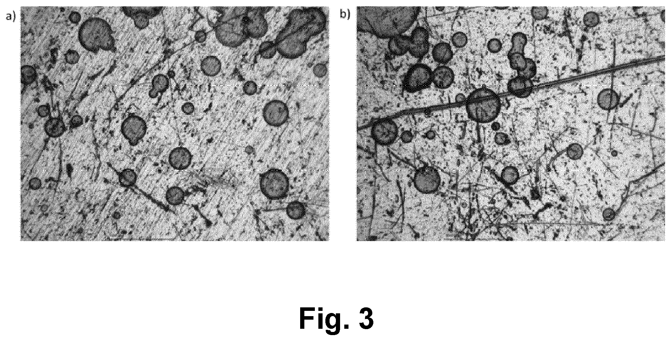

Furthermore, the obtained data showed polydispersity, as observed by optical microscopy (Fig. 3), since the sizes of the drops ranged from 50 to 700 $\mu$m. But previous studies have shown that when the electrospray conditions are kept constant, the droplet size is monodispersed, finding most droplets in a certain range. However, there were no relevant differences in mean droplet size due to small changes in the flow rate, e.g. from 0.005 to 0.01 mL·min$^{-1}$, which is consistent with the bibliography.

Observing these results, it was possible to choose two flow rates. The flow rate of 0.2 mL·min$^{-1}$ was chosen because it was the highest allowed by the device and showed a trend toward higher droplet diameters. The second level of flow rate selected was 0.01 mL·min$^{-1}$, which generated smaller droplet size than 0.2 mL·min$^{-1}$ and enough product was obtained in a reasonable time.

Characterization of skim milk:

When using capillary tubes with a very small diameter (1/16" OD), it must be verified that the liquid to be treated does not have a very high density that would not allow the flow of liquid through the capillary tube and PTFE pipe, thus collapsing the system by high fluidic resistance due to solution increased viscosity.

The density of the milk increases when the concentration of the solids-not-fat increases and decreases when the fat content increases. In this preliminary phase, the skim milk with higher concentration of dry solids was set to skim milk reconstituted at 36% (*w/w*). Thus, it was necessary to verify that the increase in density (and associated viscosity) due to the increase in concentration did not lead to the problem mentioned above. The density can be estimated with Eqn. 1, where D, $F$ and $\rho^{20}$ are the dry-matter, fat content of the milk and density, respectively (Walstra et al., 2001).

$$D = 1.23F + \frac{260(\rho^{20}-998)}{\rho^{20}} \qquad \text{Eqn. 1}$$

During the density and conductivity analyzes, it was observed that the 36% milk presented precipitates. After leaving the samples at 4 °C for 24 h, precipitation increased. Since the processing time to obtain samples was estimated of 3 hours for the samples with the lowest flow rate, the appearance of precipitate in a shorter time was an inconvenience.

If used, the processed milk would have presented a variation in concentration during processing due to the formation of precipitate in the syringe of the equipment. Furthermore, with the flow rate of 0.01 mL·min$^{-1}$, there was a risk of precipitation in the capillary tube, blocking milk flow. And if the precipitate would form in the PTFE pipe, where the electric field is generated, there was a risk of burning the product and damage the equipment.

Stability analyzes were performed for milk reconstituted at 12, 24 and 36%. Table 1 shows the different Turbiscan Stability Indexes (TSI), which measures the destabilization kinetics at a certain time and can be measured globally or in different areas of the Turbiscan® vial (low, medium and high). In the lower zone, it was observed that after one hour of analysis there were significant differences between the concentration of 36% compared to the other two concentrations. In all milk samples evaluated, a very slight increase in turbidity could be seen in the lower part of the vials, mainly due to gravity, since they were kept undisturbed during the whole analysis (0 < TSI < 0.2). For 36% milk, the sharp TSI increase showed the reconstitution process was not suitable for such a high concentration.

Table 1. Average bottom Turbiscan Stability Indexes (TSI) for skim milk powder reconstituted at 12, 24 and 36% (*w/w*).

| Reconstituted skim milk (%) | TSI (5 min) (a.u.·cm$^{-1}$) | TSI (10 TSI (20 min) min) (a.u.·cm$^{-1}$) |
|---|---|---|
| 12 | 0.00 $\pm$ 0.00[b] | 0.00 $\pm$ 0.05 $\pm$ 0.07[b] |
| 24 | 0.00 $\pm$ 0.00[b] | 0.00 $\pm$ 0.00 $\pm$ 0.00[b] |

(continued)

| Reconstituted skim milk (%) | TSI (5 min) (a.u.·cm$^{-1}$) | TSI (10 TSI (20 min) min) (a.u.·cm$^{-1}$) |
|---|---|---|
| 36 | 0.20 ± 0.00[a] | 0.40 ± 0.85 ± 0.07[a] |

Number of replicates, n = 2; Number of observations, N = 6; Mean value ± s.d.; [a-d] values per column without common superscripts were significantly different (p < 0.05).; Values without common superscripts were significantly different (p < 0.05).

In an additional test where stability was measured, simultaneously, with Turbiscan and by direct eye observation, it was observed that when the increase in light backscattering (absorbance, ABS) of the lower zone was greater than 3-4%, precipitation could be observed in the vial. In the experiment, measurements were taken every minute to have the light backscatter profile. Five minutes after starting the analysis, the ABS value for 36% milk in the lower part already exceeded the ABS values of 12 and 24% milks at 4 h. After 10 min, the ABS reached more than 5% and the outer vial presented precipitation (data not shown).

With these results, the 36% milk was discarded with the reconstitution procedure that was being carried out. Subsequently, stability tests were carried out modifying the reconstitution process. If the shaking was carried out at a temperature of 45 °C for 1 h, rather than room temperature for 30 min, and resting under darkness also increased to 1 h, the profile obtained for 36% was very similar to 12 or 24% milk (data not shown). But this meant changing the reconstitution process in the middle of the screening, so stability tests were performed with 30% milk without modifying the reconstitution process. The 30% milk presented a stability very similar to the concentrations of 12 and 24% (data not shown), and as a result, it was decided to reconstitute skim milk powder at 30% instead of 36%.

In Table 2, the analysis of variance of factors related to the electrospraying dehydration efficiency can be observed. For the total solids, significant differences (p < 0.05) were observed between the samples, except for 24 and 30% of milk samples at flow rate of 0.2 mL·min$^{-1}$. At flow rate of 0.2 mL·min$^{-1}$, total solids did not vary compared with the initial total solids of the milk. Thus, no water extraction was obtained with a flow rate of 0.2 mL·min$^{-1}$. However, when lowering the flow rate to 0.01 mL·min$^{-1}$, there was a significant (p < 0.05) water extraction.

Table 2. Total solids, Q factor and droplet diameter of electrosprayed milk samples reconstituted at 12, 24, and 30% processed at two different flow rates.

| Flow rate (mL·min$^{-1}$) | Milk reconstitution (%) | Total solids (g TS/100 g product) | Q factor[1] (dimensionles s) | Droplet diameter ($\mu$m) |
|---|---|---|---|---|
| 0.20 | 12 | 12.32 ± 0.06[e] | 1.055 ± 0.007[c] | 377 ± 74[a] |
|  | 24 | 23.55 ± 0.78[d] | 1.015 ± 0.035[c] | 269 ± 64[a,b] |
|  | 30 | 28.94 ± 0.30[d] | 0.995 ± 0.007[c] | 156 ± 155[b] |
| 0.01 | 12 | 36.77 ± 4.62[c] | 3.160 ± 0.396[a] | 283 ± 161[a,b] |
|  | 24 | 49.66 ± 4.55[b] | 2.130 ± 0.198[b] | 169 ± 60[b] |
|  | 30 | 61.88 ± 1.93[a] | 2.125 ± 0.064[b] | 148 ± 39[b] |

Number of replicates, n = 2; Number of observations, N = 12; Mean value ± s.d.; [a-d] values per column without common superscripts were significantly different (p < 0.05). [1] Ratio between the dry matter content of the concentrated product and that in the original milk (Walstra et al., 2006).

It was observed that both the flow rate and the initial concentration influenced the total solids of the final electrosprayed milk. The following model, obtained from the multiple regression analysis, is proposed to estimate the final total solids for the flow rate of 0.01mL·min$^{-1}$:

$$TS_f (\%) = 25.882 + 1.137 \cdot TS_i + 146.474 \cdot \dot{V} \qquad Eqn.2$$

where $TS_f$, $TS_i$ and V are final and initial total solids (%) and volumetric flow rate (mL·min$^{-1}$), respectively. The model is significant (p < 0.05) and presents a high determination coefficient, $R^2$ = 97.09, explaining 97% of total solids variation observed in the final product.

Observing the number of total solids, the product could not be defined as powdered milk since the maximum humidity should be around 5% and the lowest moisture content value obtained was -38%. Thus, the current conditions allowed to obtain concentrated skim milk. Using eqn. 2, and assuming that linearity is maintained, the initial solids concentration required to obtain a maximum humidity of 5%, by electrospraying at flow rate of 0.01 mL·min$^{-1}$, could be

estimated to be -58%. Additionally, if milk with 12% solids is used, it is estimated that the volumetric flow rate required for a final product with a maximum moisture content of 5% is 0.38 mL·min$^{-1}$. This result would be difficult to achieve with the current equipment design, since its maximum voltage is not enough, it has a horizontal configuration and a low distance between nozzle and collector. Industrial equipment that combines a higher electric field, a vertical nozzle configuration that takes advantage of gravity, and a greater distance between the nozzle and the collector could counteract this limitation.

Since no water extraction occurred at a flow of 0.2 mL·min$^{-1}$, the Q factor at this flow rate was -1 regardless of the initial concentration. However, for the flow rate of 0.01 mL·min$^{-1}$, the Q factors were 3, 2 and 2 for the milk reconstituted at 12, 24 and 30%, respectively (Table 2). The Q LSM value for milk reconstituted at 12% was significantly higher than those reconstituted at 24 and 30% milk. This inversely proportional relationship was explained because the increase in concentration affects milk properties such as viscosity, electrical conductivity and surface tension of the liquid, which have a direct effect on the water extraction, and will be further elaborated along with the droplet size.

The extraction of water could be due to many factors that act simultaneously either during the electrospraying or, less probable, at the deposited product. During the electrospraying process, when the water molecules are ionized with enough electrical energy to overcome the surface tension of the droplet, the removal of the solvent occurred.

Once the product is deposited on the plate collector, dehydration could be due to:

- The difference in humidity between the environment (-45%) and the sample. This may cause evaporative cooling on the surface of the sample if samples reach the collector with water activity higher than 0.45. Note that, in any case, this is a surface phenomenon at the temperature and pressure used during electrospraying. As a result, water activity testing is recommendable in future experiments.
- The presence of a constant electric field over time due to the potential difference established between the tip and the plate collector. It must be borne in mind that, in order to collect enough sample for all the analyses, the obtained product stayed for a longer time on the collector when a flow rate of 0.01 mL min$^{-1}$ was used (3 h as compared to 20 min for rates of 0.2 mL min$^{-1}$). However, it was noticeable that the final product obtained with the flow rate of 0.01 mL·min$^{-1}$ at the time of depositing on the collector, showed a high viscosity compared with that obtained at 0.2 mL·min$^{-1}$, which undoubtedly suggest that a significant water extraction occurred before the product reached the collector. Additionally, since with a flow rate of 0.2 mL·min$^{-1}$ almost no extraction of water occurred, it can be hypothesized that evaporation effect on the collector was likely minimal. Thus, a future experiment keeping the duration of electrospraying constant will be needed to confirm the hypothesis.

The decrease in flow rate might have favored an increase in the electrical load on the droplet formed, which would facilitate the extraction of water. This is due to the fact that the volume treated will be lower at the electrospraying effective section. The drops formed will be subjected to a greater electric field gradient, since a constant electrical energy is applied. The initial droplet charge can be calculated if charges are uniformly distributed as follows:

$$q_{d0} = 1.36(\rho\varepsilon_0 Q^2)^{1/2} \qquad \text{Eqn. 3}$$

where $\rho$ is density of the atomized liquid, Q is flow rate and $\varepsilon_0$ is the permittivity of vacuum.

Regarding the diameter of the droplets, it was observed that there were significant differences ($p < 0.05$) depending on the flow rate and the initial total solids (Table 2). The increase in the initial concentration of total solids triggers an increase of viscosity and superficial tension, which favors the formation of smaller droplets.

In spray drying the size of the droplets depends on the equipment used. The average diameter of droplets can be estimated by means of an atomization from various parameters. Eqn. 4 and 5 are designed for spinning disk and nozzle atomization, respectively, which are the typical configurations for spray drying.

$$d_{vs} = constant\ (Q\eta/\rho N^2 R)^{0.25} \qquad \text{Eqn. 4}$$

$$d_{vs} = constant\ (Q\eta/p)^{0.33} \qquad \text{Eqn. 5}$$

where Q is feed capacity, $\eta$ is viscosity and $\rho$ is density of the atomized liquid, N is number of revolutions per second of the disk, and R is disk diameter (disk atomization), and *p* is the pressure in the liquid before the pressure nozzle (nozzle atomization).

In electric field-induced atomization, the size of the droplets can be estimated with eqn. 6:

$$D_{d0} = (\rho \varepsilon_0 Q^3 / K\gamma)^{1/6} \quad \text{Eqn. 6}$$

where y is surface tension, K is electrical conductivity, $\varepsilon_0$ is the permittivity of vacuum. The only similarity between the two models is that the increase in volumetric flow rate, which in the case of electrospraying is elevated to the power of three, induces a larger droplet. In Table 2, it can be observed that for the same concentration there is a slight decrease in droplet size with flow rate, which agrees with the theoretical equation.

The present disclosure and/or some other examples have been described in the above. According to descriptions above, various alterations may be achieved. The topic of the present disclosure may be achieved in various forms and embodiments. All applications, modifications and alterations required to be protected in the claims may be within the protection scope of the present disclosure.

The scope of the present invention is defined in the following set of claims.

**References**

[1] Xie et al. 2014, Electrohydrodynamic atomization: A two-decade effort to produce and process micro-/nanoparticulate materials. Chemical Engineering Science, 125, 32-57.

[2] Monar and Redrován, 2017, Obtención de micropartículas de polivinilpirrolidona (PVP) a través de la técnica de electrospray. Final Project. Universidad de las fuerzas armadas, Ecuador.

[3] Huang et al., 2003, A review on polymer nanofibers by electrospinning and their applications in nanocomposites. Composites Science and Technology, 63(15), 2223-2253.

[4] Anu and Anandharamakrishnan, 2014, Electrospinning and electrospraying techniques: Potential food-based applications. Trends in Food Science & Technology, 38(1), 21-33.

[5] Landa, 2017, Desarrollo de andamios fibrosos de policaprolactona, condroitín sulfato y ácido hialurónico para regeneración de cartílago. Master thesis. Universidad de Zaragoza, Spain.

[6] Luo, C., et al., 2011. Electrospraying and Electrospinning of Chocolate Suspensions. Food and Bioprocess Technology, 5(6), 2285-2300.

[7] Wang, K., et al., 2018. Opposite results of emulsion stability evaluated by the TSI and the phase separation proportion. Colloids and Surfaces A: Physicochemical and Engineering Aspects, 558, 402-409.

[8] Walstra, et al., 2006. Dairy Science and Technology. CRC Taylor & Francis Group. New York.

[9] Schuck, P., et al., 2015. Energy consumption in the processing of dairy and feed powders by evaporation and drying. Draying Technology 33, 176-184.

**Claims**

1. A method for concentrating or dehydrating liquid products, comprising:
   applying an electrical potential to a liquid product using an injection needle, obtaining a concentrated or dehydrated product as a result,

   wherein said electrical potential is comprised in a range between 20 kV and 50 kV, and
   wherein a distance between said injection needle and a collector used for collecting the concentrated or dehydrated product is between 10 cm and 50 cm.

2. The method of claim 1, wherein the electrical potential is kept constant throughout the application of the electrical potential.

3. The method of claim 1 or 2, wherein the electrical potential is applied at a flow rate comprised between 0.005 mL min$^{-1}$ and 0.5 mL min$^{-1}$.

4. The method of any one of the previous claims, comprising a plurality of injection needles each one applying the electrical potential at the same time.

5. The method of any one of the previous claims, wherein the injection needle or the plurality of injection needles is/are set following a vertical configuration that takes advantage of gravity or following a horizontal configuration.

6. The method of any one of the previous claims, wherein before the application of the electrical potential the liquid product is subjected to a thermal process to increase or decrease a temperature of the liquid product.

7. The method of any one of the previous claims, wherein the liquid product comprises milk or a milk product and the concentrated or dehydrated product comprises concentrated milk or milk powder.

8. A system for dehydrating liquid products, comprising:

    an injection needle configured to apply an electrical potential to a liquid product, obtaining a concentrated or dehydrated product as a result; and
    a collector configured to collect the obtained concentrated or dehydrated product, wherein said electrical potential is comprised in a range between 20 kV and 50 kV, and wherein a distance between said injection needle and said collector is between 10 cm and 50 cm.

9. The system of claim 8, wherein the electrical potential is applied at a flow rate comprised between 0.005 mL min$^{-1}$ and 0.5 mL min$^{-1}$.

10. The system of any one of the previous claims 8 to 9, comprising a plurality of injection needles, each injection needle being configured according to a time-synchronized configuration with the other injection needles.

11. The system of any one of the previous claims 8 to 10, wherein the injection needle or the plurality of injection needles is/are set following a vertical configuration that takes advantage of gravity.

12. The system of any one of the previous claims 8 to 10, wherein the injection needle or the plurality of injection needles is/are set following a horizontal configuration.

13. The system of any one of the previous claims 8 to 12, wherein the injection needle or the plurality of injection needles is/are made of an electrically conductive material.

14. The system of any one of the previous claims 8 to 13, wherein the collector and the injection needle or the plurality of injection needles are disposed within a closed chamber.

15. The system of any one of the previous claims 8 to 14, wherein the liquid product comprises milk or a milk product and the concentrated or dehydrated product comprises concentrated milk or milk powder.

# Fig. 1 (Prior Art)

# Fig. 2

# Fig. 3

**EP 4 265 117 A1**

## EUROPEAN SEARCH REPORT

Application Number

EP 22 38 2382

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAJ-AHMAD RITA ET AL: "Stable increased formulation atomization using a multi-tip nozzle device", DRUG DELIVERY AND TRANSLATIONAL RESEARCH, SPRINGER, GERMANY, vol. 8, no. 6, 5 June 2018 (2018-06-05), pages 1815-1827, XP036629282, ISSN: 2190-393X, DOI: 10.1007/S13346-018-0518-4 [retrieved on 2018-06-05] * page 1817; figure 15 * | 1,3,5,8, 9,11-13 | INV. A23C1/00 A23C9/00 B05D1/04 |
| X | PAWAR ABHIJIT ET AL: "A bird's eye view of nanoparticles prepared by electrospraying: advancements in drug delivery field", JOURNAL OF CONTROLLED RELEASE, ELSEVIER, AMSTERDAM, NL, vol. 286, 24 July 2018 (2018-07-24), pages 179-200, XP085477995, ISSN: 0168-3659, DOI: 10.1016/J.JCONREL.2018.07.036 * page 189; figure 3; table 1 * | 1,5,6,8, 11-13 | |
| X | Pérez Playà Bernat: "Milk solid deposition induced by an electric field. A preliminary study", , 18 November 2020 (2020-11-18), pages 1-49, XP055964448, Retrieved from the Internet: URL:https://ddd.uab.cat/pub/trerecpro/2022 /259050/TFM_bperezplaya.pdf [retrieved on 2022-09-24] | 1,2,7,8, 13-15 | TECHNICAL FIELDS SEARCHED (IPC) A23C C23D B05D |
| Y | * sections 1.1; 3.1; 1.2.5.2; pages 4, 10 * | 4,10 | |

-/--

The present search report has been drawn up for all claims

| Place of search | Date of completion of the search | Examiner |
|---|---|---|
| Munich | 26 September 2022 | Czerny, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EUROPEAN SEARCH REPORT**

Europäisches Patentamt
European Patent Office
Office européen des brevets

Application Number

EP 22 38 2382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YING YANG ET AL: "A shield ring enhanced equilateral hexagon distributed multi-needle electrospinning spinneret", IEEE TRANSACTIONS ON DIELECTRICS AND ELECTRICAL INSULATION, IEEE SERVICE CENTER, PISCATAWAY, NJ, US, vol. 17, no. 5, 1 October 2010 (2010-10-01), pages 1592-1601, XP011319532, ISSN: 1070-9878 * figure 2 * | 4,10 | |

TECHNICAL FIELDS SEARCHED (IPC)

The present search report has been drawn up for all claims

| Place of search | Date of completion of the search | Examiner |
|---|---|---|
| Munich | 26 September 2022 | Czerny, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XIE et al.** Electrohydrodynamic atomization: A two-decade effort to produce and process micro-/nanoparticulate materials. *Chemical Engineering Science,* 2014, vol. 125, 32-57
- Obtención de micropartículas de polivinilpirrolidona (PVP) a través de la técnica de electrospray. **MONAR ; REDROVÁN.** Final Project. Universidad de las fuerzas armadas, 2017
- **HUANG et al.** A review on polymer nanofibers by electrospinning and their applications in nanocomposites. *Composites Science and Technology,* 2003, vol. 63 (15), 2223-2253
- **ANU ; ANANDHARAMAKRISHNAN.** Electrospinning and electrospraying techniques: Potential food-based applications. *Trends in Food Science & Technology,* 2014, vol. 38 (1), 21-33
- Desarrollo de andamios fibrosos de policaprolactona, condroitín sulfato y ácido hialurónico para regeneración de cartílago. **LANDA.** Master thesis. Universidad de Zaragoza, 2017
- **LUO, C. et al.** Electrospraying and Electrospinning of Chocolate Suspensions. *Food and Bioprocess Technology,* 2011, vol. 5 (6), 2285-2300
- **WANG, K. et al.** Opposite results of emulsion stability evaluated by the TSI and the phase separation proportion. *Colloids and Surfaces A: Physicochemical and Engineering Aspects,* 2018, vol. 558, 402-409
- **WALSTRA et al.** Dairy Science and Technology. CRC Taylor & Francis Group, 2006
- **SCHUCK, P. et al.** Energy consumption in the processing of dairy and feed powders by evaporation and drying. *Draying Technology,* 2015, vol. 33, 176-184